Europäisches Patentamt

European Patent Office

Office européen des brevets

(19)

(11) Veröffentlichungsnummer: **0 043 477**
A2

(12) # EUROPÄISCHE PATENTANMELDUNG

(21) Anmeldenummer: 81104737.2

(22) Anmeldetag: 20.06.81

(51) Int. Cl.³: **F 02 M 25/10,** F 02 M 27/04

(30) Priorität: 04.07.80 DE 3025500
01.10.80 DE 3037129
10.12.80 DE 3046424

(43) Veröffentlichungstag der Anmeldung: **13.01.82**
**Patentblatt 82/2**

(84) Benannte Vertragsstaaten: **AT DE FR GB IT NL SE**

(71) Anmelder: **Pruss, Günter, Amselweg 3,**
**D-2211 Wrist/Holstein (DE)**

(72) Erfinder: **Pruss, Günter, Amselweg 3,**
**D-2211 Wrist/Holstein (DE)**

(74) Vertreter: **Schupfner, Gerhard, Dr. et al, Müller,**
**Schupfner & Gauger Patentanwälte Karlstrasse 5,**
**D-2110 Buchholz/Nordheide (DE)**

(54) **Verfahren und Vorrichtung zum Betreiben von Verbrennungskraftmaschinen und Verbrennungsanlagen.**

(57) Zur Intensivierung der Verbrennungsvorgänge in Verbrennungskraftmaschinen und Verbrennungsanlagen wird diesen ozonisierter Luftsauerstoff zugeführt, der vor der Ozonisierung getrocknet wurde.

Ozongenerator und Lufttrockner sind im Ansaugbereich angeordnet und werden in Kraftfahrzeugen mittels eines Spannungswandlers ohne externe Energie betrieben.

Müller, Schupfner & Gauger
Patentanwälte

A-004 80 FB

A-00043477

# VERFAHREN UND VORRICHTUNG ZUM BETREIBEN VON VERBRENNUNGSKRAFTMASCHINEN UND VERBRENNUNGSANLAGEN

Die Erfindung bezieht sich auf ein Verfahren und eine Vorrichtung zum Betreiben von Verbrennungskraftmaschinen und -anlagen, wobei die Verbrennungsluft mit Ozon angereichert wird. Die Ozonerzeugung erfolgt in an sich bekannter Weise.

Infolge des ständig steigenden Brennstoffverbrauches, der erhöhten Preise und der besorgniserregenden Verknappung des Erdöles auf dem Weltmarkt sind energiesparende Maßnahmen in immer stärkerem Maße erforderlich. Voraussetzung für solche Maßnahmen ist ihre kostengünstige technische Durchführbarkeit in Verbindung mit einer möglichst eleganten Verfahrenstechnik und konstruktiver Anpassung, um so den Stand der Technik wesentlich zu verbessern. Neben der Einsparung von Kraftstoffen ist es erforderlich, Verbrennungsvorgänge so umweltfreundlich wie möglich zu gestalten. Abgase sollen nur minimale Anteile an schädlichen Komponenten, insbesondere geringstmögliche Kohlenwasserstoff-, CO- und NOx-Werte aufweisen.

Bekannt sind konstruktive Maßnahmen am Verbrennungsraum, um Brennstoff einzusparen. Sie basieren insbesondere auf dem Gedanken, den Brennstoff höher als bislang zu verdichten, um so den thermischen Wirkungsgrad anzuheben.

Allerdings muß hierbei ein besserer Wirkungsgrad mit robusteren Maschinenkonstruktionen erkauft werden, d.h. mehr teueres Material und dadurch bedeutend mehr Gewicht. Eine solche Lösung könnte nur durch einen weiteren extremen Preisanstieg auf dem Ölmarkt vertretbar werden. Sie steht aber auch im Widerspruch zu dem Wunsch, Rohstoffe einzusparen und leichte Maschinen zu bauen.

Der Einsatz elektronischer Zündsysteme wirkt sich kaum auf die Zündwilligkeit des Gas/Luft-Gemisches aus. Wenn auch die Zündfolge genauer wird, von dem für die Leistung notwendigen Kraftstoff wird kaum etwas eingespart. - Man hat auch Wasser in die Verbrennungsräume eingespritzt, beispielsweise beim Betrieb von Dieselmaschinen oder beim Startvorgang von Turbinen, um unter anderem eine Kühlung in den Zylindern bzw. Verbrennungsräumen zu erzielen. Dies soll die Verbrennungstemperatur steuern und das Füllvolumen in den Zylindern bzw. den Verbrennungsräumen vergrößern. Man erhoffte sich hierdurch sowohl eine Leistungssteigerung als auch bessere Abgaswerte. Das Verfahren hat sich jedoch aus praktischen Gründen nicht durchgesetzt und erbrachte auch nicht die angestrebte Leistungsverbesserung und Herabsetzung der Abgaswerte.

Bekannt ist aus US-PS 3 157 172 der Versuch, die Verbesserung des Verbrennungsvorganges in Benzinmotoren mit Hilfe von Ozon anzustreben. In dieser Patentschrift wird Ozon für die Verbrennung herangezogen, das durch die Funkenbildung im Zündverteiler entstehen soll. Da die Entladungsflächen der Kontakte im Zündverteiler viel zu klein

...

sind, reichen Ozonmengen, die im Luftvolumen des Zündverteilers entstehen, nicht aus, um in einem Gas/Luft-Gemisch wirksam zu werden. Eventuell entstehendes Ozon würde darüberhinaus sofort wieder zerfallen, da allein der Abrieb an den Kontakten Metallstaub hervorbringt, der auf Ozon katalytisch zersetzend wirkt, und zwar ebenso wie auch anwesendes Schmierfett, Kondenswasser und andere Verunreinigungen. Die gemäß dieser Patentschrift angestrebte Verbesserung des Verbrennungsvorganges ist mit dem offenbarten Verfahren nicht erreichbar.

Auch aus DE-OS 21 26 271 ist bekannt, vor der Gemischbildung im Vergaser die Ansaugluft mit Ozon anzureichern. Die Erzeugung des Ozons erfolgt in Hochspannungsfeldern. Zur bestmöglichen Ausnutzung des Ozons ist unter Umgehung des Vergasers eine direkte Einleitung in den Verbrennungsraum vorgesehen. Diese und andere bekannte Verfahren konnten sich wegen der Instabilität und der zu geringen Konzentration des in der Ansaugluft enthaltenen Ozons nicht durchsetzen.

Es ist Aufgabe der vorliegenden Erfindung, ein modernes Verfahren zum kraftsparenden und umweltfreundlichen Betreiben von Verbrennungskraftmaschinen und Verbrennungsanlagen bereitzustellen, das die angezeigten Nachteile des Standes der Technik mit einfachen und weniger komplizierten konstruktiven Mitteln behebt und den Wirkungsgrad der Energieumwandlung bei Verbrennungsvorgängen in Brennstoffen verbessert.

Gemäß den Patentansprüchen wird die gestellte Aufgabe erfindungsgemäß dadurch gelöst, daß der zur Verbrennung eingesetzte Luftsauerstoff vor Bildung zündfähiger Gasgemische zumindest teilweise eine Strukturumwandlung erfährt und nach Trocknung und Ozonisierung ein beständiges, konzentriertes Luftsauerstoff-Ozongemisch mit mindestens etwa 1500 ppm im Unterdruckbereich des Ansaugsystems

....

erzeugt und dem Brennstoff zugeführt wird. Dies wird dadurch erreicht, daß eine Trockenvorrichtung dem Ozonerzeuger vorgeschaltet ist, und gegebenenfalls über eine zusätzliche Zuleitung den Ansaugbereichen einer Verbrennungskammer und ihrem Gasangebot das stabile konzentrierte Luftsauerstoff-Ozongemisch zugeführt wird. Eine solche Anordnung ist geeignet, Verbrennungsvorgänge in Brennkammern zu intensivieren, und zwar unter weitgehender Ausschaltung schädlicher und im Abgas verbleibender Additive, und eine vollständige Verbrennung weitgehend ohne die Bildung schädlicher Nebenprodukte, wie Stickoxide, zu erreichen. Eine genaue Einstellung des Zündzeitpunktes auf den so intensivierten Verbrennungsvorgang ist zu berücksichtigen und trägt zur Verbesserung der Abgaswerte bei.

Die Ozonanreicherung erfolgt in an sich bekannter Weise, etwa mittels einer UV-Röhre, die aufgrund ihrer Spezialummantelung aus synthetischem Quarzglas für Wellenlängen durchlässig ist, die für eine starke Ozonbildung sorgen. So ist beispielsweise das Gerät E 300 der Firma BLV-Licht- und Vakuumtechnik, Steinhöring bei München, mit einer Leistung von 12 Watt geeignet.
Besonders geeignet sind Röhren mit stiller Entladung (Funkenstrecke), die mit großer Ozonausbeute in wirtschaftlicher Weise betrieben werden können. Der hochfrequente Wechselstrom für ihren Betrieb kann von der elektrischen Versorgung eines Kraftfahrzeuges wie auch vom Hochspannungsgenerator einer Ölheizung geliefert werden. Geeignet ist beispielsweise die Röhre 3020-GL 44 der Firma Argentox, Hamburg, die 22 g Ozon/m$^3$ Luft liefert.

Gemäß einer Ausgestaltung der Erfindung wird vorgeschlagen, den angesaugten Luftsauerstoff zu verwirbeln. Das kann mittels Wirbelblechen oder Wirbelkammern im Filter

...

oder Ansaugbereich erreicht werden, so daß das Anreichern des Ozons im Luftstrom erleichtert und verbessert wird. Durch die Anreicherung des Ozons im Luftsauerstoff erhöht sich die Zündwilligkeit des Verbrennungsgemisches, und der Verbrennungsvorgang wird intensiviert. Eine bessere Verbrennung mindert aber den Verbrauch. Die entstehenden Sauerstoffradikale bewirken dabei noch zusätzlich einen Nachbrenn-Effekt.

Eine weitere Ausgestaltung der Erfindung besteht darin, daß zur Verstärkung der Ozonerzeugung die ozonbildenden Röhren gebündelt angeordnet sind, und zwar so gegeneinander versetzt, daß die Strahlung des Röhrenbündels kontinuierlich erfolgt. Es kann sich auch als zweckmäßig und vorteilhaft erweisen, Ozongeneratoren auf Basis von UV und stiller Entladung zu kombinieren.

Eine weitere vorteilhafte Ausgestaltung der Erfindung besteht darin, daß der Ansaugleitung des Luftfilters eine zweite Zuleitung parallel zugeordnet ist, wobei die Lufteintrittsöffnung des zweiten Stutzens jedoch wesentlich kleiner und am Ende verschlossen ist. In dieser Anordnung ist der Ozongenerator in der zweiten Zuleitung untergebracht. Beide Zuleitungen sind jedoch mittels einer Düse seitlich miteinander verbunden. Der beabsichtigte Effekt besteht darin, daß der Luftstrom der Zuleitung mit größerem Eintrittsquerschnitt den mit Ozon angereicherten Luftsauerstoff der Zuleitung mit geringerem Eintrittsquerschnitt mitreißt. Bei dieser Anordnung wird erreicht, daß die Ozonbildung mit einer gewissen Zeitverzögerung in einem kleineren Luftvolumen mit ruhigerer Strömung gründlicher erfolgt.

Falls nur ein Teil der zugeführten Verbrennungsluft
ozonisiert wird, ist vorteilhafterweise nur dieser
Teil der Verbrennungsluft vorzutrocknen.Zur Erzielung
der gewünschten günstigen Abgas- und Verbrauchswerte
genügt überraschenderweise auch die Trocknung nur
eines Teiles der Verbrennungsluft, soweit Trocknung
und Ozonisierung im Ansaugbereich der Verbrennungskraftmaschine oder Verbrennungsanlage vorgenommen werden.

Gemäß einer weiteren besonders geeigneten Ausführungsform der Erfindung wird der Ozonerzeuger, der ja nicht
formgebunden ist, in den Luftfilter integriert. Eine
solche Ausführungsform besteht darin, daß in dem
oberen Teil eines Luftfilters ein kreisrunder Ozonerzeuger gegebenenfalls zusammen mit der Trockenvorrichtung
angeordnet ist, der mit dem Luftfilter in Verbindung
steht, aber gegenüber dem eigentlichen Ansaugbereich
des Luftfilters hermetisch abgeschlossen ist.

Gemäß dieser Ausführungsform der Erfindung bilden Ozonerzeuger und gegebenenfalls Trockenvorrichtung mit dem Luftfilter eine konstruktive Einheit.

-6-

Der Ozonerzeuger wird in Kraftfahrzeugen vorzugsweise so
angebracht, daß der Luftstrom des Fahrtwindes über einen
Filter in den elektrischen Entladungsraum eines insbes. zylindrischen Ozonerzeugers zur Strukturumwandlung des anteiligen
Luftsauerstoffs stetig strömend gelangt. Er besteht im
wesentlichen aus einem rohrförmigen äußeren Edelstahlmantel
als Kathode, mit den beiden Stutzen für den Gaseingang und
Gasausgang, in dem ein gleichfalls rohrförmiges Dielektrikum aus Glas angeordnet ist. Die Strukturumwandlung des
anteiligen Luftsauerstoffs, also die ozonerzeugende Entladung, findet in dem umgebenden Luftspalt zwischen der
äußeren Kathode und dem inneren Dielektrikum statt, wobei
das Dielektrikum als Anodenträger dient und auf seiner
Rückseite die Gegenelektrode in Form einer Metallschicht
aufgetragen ist. Der Entladungsraum ist mittels zweier
Teflondichtungen vorn und hinten isoliert und hermetisch
verschlossen. Bevorzugt wird ein luftgekühlter Ozonerzeuger gewählt. Der kühlende Luftstrom durchströmt axial den
Innenraum des Ozonerzeugers, in dem gleichzeitig starke
elektrische Entladungen zusätzlich zur eigentlichen Ozonerzeugung im ringförmigen Entladungsraum entstehen. Auch
in diesem Bereich entsteht somit Ozon,das zusätzlich nutzbar gemacht werden kann.
Die der Kathode zugewandte Seite des Dielektrikums kann
zur Verstärkung der Intensität der Ozonerzeugung aufgerauht sein. Durch Spitzenentladung erwärmt sich der Generator, was unter Umständen eine gegebenenfalls erforderliche Trocknung des zu ozonisierenden Luftstromes erleichtert.


Der erfindungsgemäß eingesetzte Ozonerzeuger arbeitet
bereits in Verbindung mit einer entsprechend ausgelegten

...

Elektronik betriebssicher und erfolgreich in Kraftfahrzeugen.   An die Batterie eines Fahrzeuges mit normal
ausgerüstetem Ottomotor ist ein Spannungswandler angeschlossen, vorzugsweise vom Typ SW 220 L 12V = 220 V ⌐ᴸ,
220 W der Firma Grigelat in Rückersdorf/Nürnberg, welcher
den erforderlichen Wechselstrom für einen Transformator
liefert, der diesen Wechselstrom auf ca. 6 - 10 KV hochtransformiert und so die Energieversorgung des Ozonerzeugers sicherstellt.

Auch der Einsatz der Anlage in Dieselmaschinen bietet
sich an. Auf kostspielige Katalysatoren, wie neuerdings
vorgesehen, kann dann verzichtet werden. Ergiebig zeigte
sich die Anlage auch für Benzinmotoren bei der Anreicherung von Magergemischen. Besonders hervorragende Eigenschaften sind auch beispielsweise selbstregelnde Vorgänge: Bei erhöhter Geschwindigkeit wird dem Ozonerzeuger mehr Luftsauerstoff zugeführt. Die Umwandlungsrate
Luftsauerstoff/Ozon steigt, und es wird im Gegensatz zu
normalen Bedingungen bei Geschwindigkeitserhöhung mehr
Kraftstoff eingespart.

Die konstruktive Eigenart des beschriebenen, luftgekühlten Ozonerzeugers läßt weitere, exklusive Möglichkeiten
erkennen: So kann beispielsweise die Anode aus einem
Sauerstoff abgebenden Material bestehen, so daß der verfügbare Sauerstoffanteil in der Luft durch leichter abspaltbarem Sauerstoff aus einem anderen Material erhöht
wird.

...

0043477

Frequenzerhöhungen sind möglich und wünschenswert, da
dadurch zwangsläufig eine Verkleinerung der elektronischen Anlage ermöglicht wird. Auch kann Gleichstrom verwendet werden.

Die Trocknung erfolgt durch eine in der Ansaugleitung
installierte oder davor vorgesehene Trockenvorrichtung,
etwa auf elektrischem oder chemischem Weg oder durch
atmosphärische Trocknung. Geeignet hierfür ist jede
Trocknungsvorrichtung, die für den Langzeitbetrieb eingerichtet ist. Wenn auch prinzipiell preßluftbetriebene
Lufttrockner und vom Keilriemen mitangetriebene und gegebenenfalls von einem Regler gesteuerte Drucklufttrockner für das erfindungsgemäße Verfahren geeignet sind, so
ist eine regenerierbare Trocknungsvorrichtung, die mit
einer stark wirksamen Trocknersubstanz beschichtet oder imprägniert ist,besonders geeignet.Ebenso ist die Kältetrocknung anwendbar.

In Kraftfahrzeugen wird der Lufttrockner vorzugsweise so
angebracht, daß die Regenerationsluft für die Austreibung
des vom Trockenkörper aufgenommenen Wassers von der
Überschußwärme der heißen Abgase über einen Wärmetauscher
aufgeheizt wird, die sodann das Wasser aus dem Trockenkörper austreibt und den Trockner im Gegenstrom zum
Feuchtlufteintritt verläßt. Der Lufttrockner besteht
im wesentlichen aus einem unbrennbaren scheibenförmigen
oder zylindrischen, porösen Trockenkörper, der durchgehend mit einer starken Trockensubstanz beschichtet oder
imprägniert ist.

· · ·

Der Trockenkörper ist drehbar in einem räumlich unterteilten Gehäuse so angeordnet, daß etwa zwei Drittel seines Volumens für die Adsorption verfügbar sind und ein Drittel für die Regeneration. Ein kleines Getriebe sorgt für eine langsame Rotation des Trockenkörpers, der sich so nach Wasseraufnahme im Adsorptionsraum in den Regenerationsraum bewegt, in dem das Wasser von dem durch die Abgase aufgeheizten Regenerationsluftstrom ausgetrieben wird.

Je ein Ventilatorrad drückt einmal die Feuchtluft durch den Trockenkörper im Adsorptionsraum wie auch die Regenerationsluft für den Wasseraustrieb. Dichtungen trennen den Feuchtluftstrom vom Regenerationsluftstrom im Gehäuse, wobei diese Schleifdichtungen aufgrund der langsamen Rotation des Trockenkörpers (6 - 8 Umdrehungen pro Stunde) kaum belastet werden.

Die konstruktive Eigenart des beschriebenen Lufttrockners mit langsam rotierendem Trockenkörper bietet weitere exklusive Möglichkeiten. So kann beispielsweise die Regeneration des Trockenkörpers auch direkt mit dem heißen Abgas einer Verbrennungsmaschine durchgeführt werden, das ja bereits auch entfeuchtet ist. In einem weiteren Ausführungsbeispiel wird vorgeschlagen, die Trockenluft in einen Kreisprozess zu führen, sie also nach Aufheizen durch den Auspuffkrümmer beispielsweise für den Regenerationsvorgang heranzuziehen. Der Trockenluftbedarf für den Betrieb der Verbrennungsmaschine kann hierbei über einen Beipass aus dem Kreisprozeß entnommen werden. Beide Luftströme, sowohl die Feuchtluft als auch die Regenerationsluft, sind regulierbar, so daß der Lufttrockner

...

den unterschiedlichsten Bedürfnissen angepaßt werden kann. Gegebenenfalls kann die Temperatur der Regenerationsluft von einem Thermostaten geregelt werden.

Der vorgeschaltete Trockner kann mit einem Spannungswandler gleichen Typs wie für den Ozongenerator vorgesehen betrieben werden, so daß es möglich ist, die erfindungsgemäße Vorrichtung unabhängig von externer Energie einzusetzen. Die Einstellung der für die Ozonerzeugung eingesetzten Verbrennungsluft auf einen Taupunkt von etwa $-40^o$C ist wünschenswert. Die eingesetzte Verbrennungsluft weist einen Wassergehalt von etwa 0,2 g/m$^3$ Luft bei 25$^o$C auf. Das Verbrennungsgas ist auf einen Wassergehalt von mindestens 6 g pro kg Luft bei 42$^o$C Trockenluft-Austrittstemperatur zu trocknen.

Vorzüglich eignet sich für das erfindungsgemäße Verfahren beispielsweise der MUNTERS-Trockner M 120 der Firma Berner, International GmbH. Mit diesem Trockner wurde Außenluft, die bei 20$^o$C 11 g Wasser/kg Luft enthielt, bis auf 5 g Wasser/kg Luft getrocknet und in den Verbrennungsraum einer Verbrennungskraftmaschine eingeleitet.

Versuche und sorgfältige Messungen haben ergeben, daß bei Betrieb der Anlage die Abgaswerte stark verringert werden und der Kraftstoffverbrauch herabgesetzt wird. So konnten im Europa-Test (European Cycle - ECE) an einer bezüglich Abgas- und Verbrauchswerten bereits optimierten Verbrennungskraftmaschine der Verbrauch noch um 2,71 % und die CO-Werte sogar um 44 % herabgesetzt werden. Im CVS-USA-Test wurden die Verbrauchswerte sogar um 2,73 % verbessert. Weiterhin wurde festgestellt, daß durch Einleitung von getrockneter, mit Ozon angereicherter Verbrennungsluft in die Abgasleitung eines Dieselmotors der Partikelgehalt im Abgas um über 20 % herabgesetzt wird.

Die Erfindung wird anhand der in den Zeichnungen dargestellten Ausführungsformen beispielsweise näher erläutert.

. . . . .

Es zeigen:

Fig. 1 einen Schnitt durch die Anordnung, Luftfilter und Zuleitung mit Lufttrockner und Ozonerzeuger,

Fig. 2 eine Draufsicht auf die parallel angeordneten Zuleitungen mit Ozonerzeuger,

Fig. 3 einen Schnitt durch einen Ozonerzeuger,

Fig. 4 ein Funktionsbild eines Adsorptionstrockners

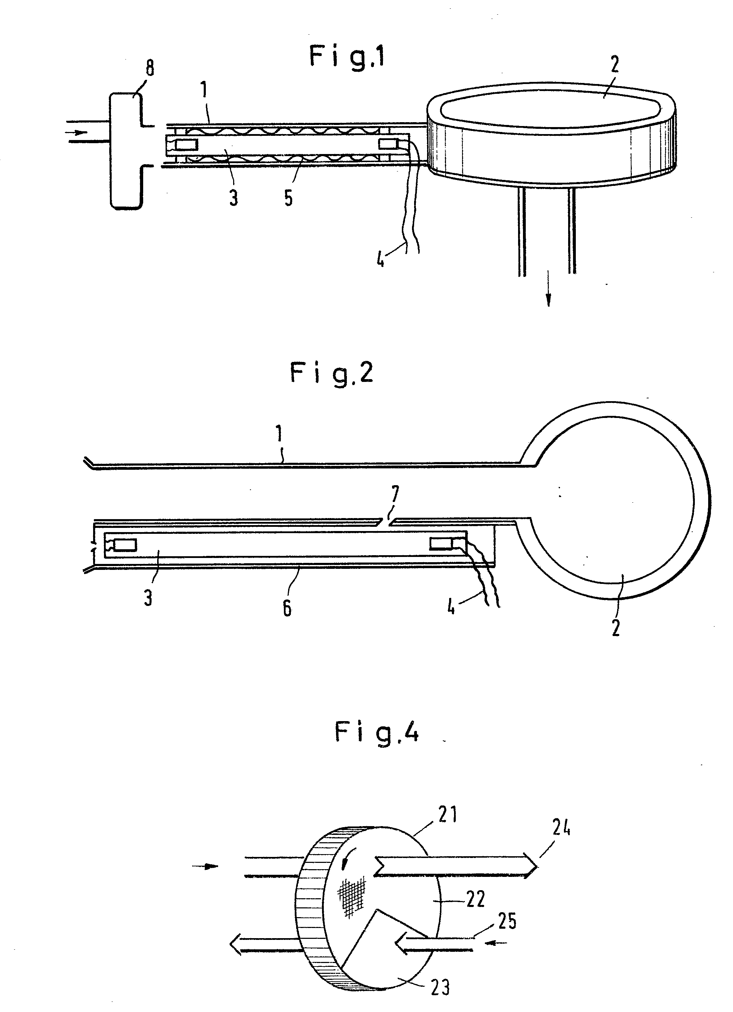

Gemäß Fig. 1 ist ortsfest in der Ansaugleitung 1 eines Luftfilters 2 ein Ozongenerator 3 (gezeigt mit seinen elektrischen Anschlüssen 4) angebracht, der von einem spiralförmigen Wirbelblech 5 umgeben ist, sowie ein Lufttrockner 8. Gemäß Fig. 2 ist der Ansaugleitung 1 eine weitere Zuleitung 6 zugeordnet, die als Ozongenerator 3 einen solchen mit stiller Entladung enthält und mit dem Luftfilter 2 über eine verbindende Düse 7 zum Ansaugstutzen 1 verbunden ist. Hierbei vermag die Zuleitung vor Feuchtigkeit zu schützen und bietet gute Isolationsmöglichkeit.

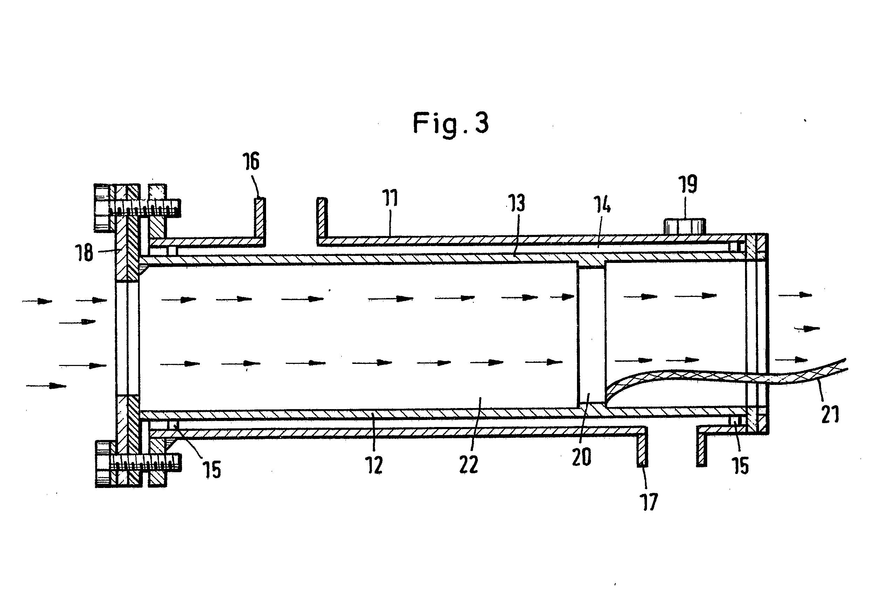

Gemäß Fig. 3 besteht der Ozonerzeuger aus dem äußeren Edelstahlgehäuse 11 als Kathode, dem Dielektrikum 12 mit einer aufgetragenen Metallschicht als Anode 13 und dem dazwischenliegenden Luftspalt 14 als Entladungsraum für die Strukturumwandlung des Luftsauerstoffs. Der Entladungsraum 14 ist mittels zweier Teflondichtungen 15 an seiner vorderen und hinteren Stirnseite hermetisch verschlossen. An dem äußeren Edelstahlgehäuse der Kathode 11 befindet sich der Lufteingang 16 zum Entladungsraum 14 und der Austrittsstutzen für das Luftsauerstoff-Ozongemisch 17,

...

- 12 -

0043477

sowie der Montageflansch 18 und der Masseanschluß 19. Der
elektrische Anodenanschluß besteht aus einem Metallring 20
mit nach außen führendem Kabel 21. Der den Ozonerzeuger
kühlende Luftstrom durchströmt axial den Innenraum des
Ozonerzeugers 22. Er ist in der Zeichnung lediglich durch
kleine Pfeile angedeutet. Beim Lufteingang 16 ist eine
Vorrichtung zur Trocknung der einströmenden Luft vorgesehen (nicht gezeigt).

Fig. 4 gibt einen auf chemische Weise arbeitenden Adsorptionstrockner im Funktionsbild wieder. Er besteht aus dem
Adsorptionskörper 21 , der sich langsam rotierend durch
die Adsorptionskammer 22 und die Regenerationskammer 23
bewegt. Die Feuchtluft wird durch den Stutzen 24 in den
Trockenkörper 21 und die Trockenluft über den Ausgang des
Stutzens 24 in den Ozongenerator (nicht gezeigt) gesaugt.
Durch den Stutzen 25 tritt Regenerationsluft in die
Regenerationskammer 23 ein und treibt durch den Wärmetauscher
am Auspuffkrümmer (nicht gezeigt) erhitzt das aufgenommene
Wasser aus dem Adsorptionskörper 21 aus.

Müller, Schupfner & Gauger
Patentanwälte

A-004 0043477

P a t e n t a n s p r ü c h e

1. Verfahren zum Betreiben von Verbrennungskraftmaschinen
und Verbrennungsanlagen unter Zufuhr von mit Ozon angereichertem Luftsauerstoff,
d a d u r c h  g e k e n n z e i c h n e t , daß zumindest
ein Teil der erforderlichen Verbrennungsluft trocken zugeführt und        mit Ozon angereichert wird.

2. Verfahren nach Anspruch 1, d a d u r c h  g e k e n n -
z e i c h n e t , daß  Verbrennungsluft, die auf mindestens 6 g Wasser/kg Luft bei 42°C Trockenluft-Austrittstemperatur getrocknet ist, zugeführt wird.

3. Verfahren nach Anspruch 1 oder 2, d a d u r c h  g e -
k e n n z e i c h n e t , daß die der Verbrennungskraftmaschine bzw. Verbrennungsanlage als Verbrennungsluft
zugeführte Außenluft vor der Ozonisierung durch Vorschalten oder Einschalten eines Lufttrockners in die
Ansaugleitung getrocknet wird.

4. Verfahren nach einem  der Ansprüche 1 bis 3, d a d u r c h
g e k e n n z e i c h n e t , daß die getrocknete, mit
Ozon angereicherte Luft gleichzeitig oder ausschließlich
dem Abgassystem zur Einleitung einer Nachverbrennung zugeführt wird.

5. Vorrichtung zur Durchführung des Verfahrens nach einem der
Ansprüche 1 bis 4, d a d u r c h  g e k e n n z e i c h n e t , daß mindestens ein Ozongenerator vor, in oder an der Ansaugleitung angeordnet
und dem Ozongenerator eine Trockenvorrichtung vorgeschaltet ist.

. . . .

6. Vorrichtung nach Anspruch 5, d a d u r c h   g e -
   k e n n z e i c h n e t ,   daß Ozongenerator und
   Trockenvorrichtung vor, im oder am Luftfilter (2)
   einer Verbrennungsmaschine angeordnet sind.

7. Vorrichtung nach einem der Ansprüche 5 bis 6,
   d a d u r c h   g e k e n n z e i c h n e t ,   daß Ozongenerator und Trockenvorrichtung mit dem Luftfilter
   eine konstruktive Einheit bilden.

8. Vorrichtung nach einem der Ansprüche 5 bis 7,
   d a d u r c h   g e k e n n z e i c h n e t ,   daß als
   Ozongenerator eine Röhre mit stiller Entladung und/oder
   eine optische Röhre eingesetzt wird.

9. Vorrichtung nach einem der Ansprüche 5 bis 8,
   d a d u r c h   g e k e n n z e i c h n e t ,   daß der
   Ozongenerator in einer der Ansaugleitung zugeordneten zweiten Zuleitung angeordnet ist.

10. Vorrichtung nach einem der Ansprüche 5 bis 9,
    d a d u r c h   g e k e n n z e i c h n e t ,   daß der
    Ozongenerator axial an einem spiralförmigen Wirbelblech
    in der Ansaugleitung angeordnet ist.

11. Vorrichtung nach einem der Ansprüche 9 oder 10,
    d a d u r c h   g e k e n n z e i c h n e t ,   daß die
    zweite Zuleitung mittels einer Düsenöffnung mit der
    Ansaugleitung oder dem Luftfilter verbunden ist.

...

12. Verfahren nach einem der Ansprüche 5 bis 11,
d a d u r c h   g e k e n n z e i c h n e t ,   daß in
Kraftfahrzeugen als Ozongenerator eine Röhre mit stiller
Entladung und Luftkühlung, vorzugsweise über einen Filter durch den Luftstrom des Fahrtwindes, eingesetzt
wird.

13. Verfahren nach Anspruch 12, worin der Ozongenerator
durch die folgenden Merkmale ausgezeichnet ist:
ein äußeres Edelstahlgehäuse als Kathode
mit Ein- und Austrittsstutzen,
ein Dielektrikum mit aufgebrachter Metallschicht als Anode,
einem ringförmigen Luftspalt als Entladungsraum und einen Innenraum zur Luftkühlung, der
vorzugsweise als Ansaugleitung ausgebildet ist.

14. Vorrichtung nach einem der Ansprüche 5 bis 13,
d a d u r c h   g e k e n n z e i c h n e t ,   daß ein
regenerierbarer Adsorptions-Lufttrockner dem Ozongenerator vorgeschaltet ist.

15. Vorrichtung nach Anspruch 14,   d a d u r c h   g e -
k e n n z e i c h n e t ,   daß ein Lufttrockner eingesetzt ist, der mittels des Wärmeüberschusses der
Verbrennungskraftmaschine oder Verbrennungsanlage
regenerierbar ist.

16. Vorrichtung nach einem der Ansprüche 5 bis 15,
d a d u r c h   g e k e n n z e i c h n e t ,   daß ein
Lufttrockner und ein Ozongenerator vorgesehen sind,
die mittels eines Spannungswandlers in Kraftfahrzeugen
ohne externe Energie betreibbar sind.

Fig.1

Fig.2

Fig.4

Fig. 3